# EUROPEAN PATENT APPLICATION

(11) **EP 4 321 753 A1**
(43) Date of publication of application: **14.02.2024**
(21) Application number: 22382779.1
(22) Date of filing: 10.08.2022
(51) Int. Cl.: F03D 80/60, F03D 17/00

(54) **EXTERIOR COOLING FINS**

(71) Applicant: Siemens Gamesa Renewable Energy Innovation & Technology S.L., 31621 Sarriguren (Navarra) (ES)
(72) Inventor: Guevara Martinez, Sergio, 30800 Lorca (ES); Sanchez Mouro, Francisco, 28030 Madrid (ES)
(74) Representative: SGRE-Association

(57) **Abstract**

The present invention relates to a nacelle (1) for a wind turbine comprising an outer surface (2) and a cooling circuit (3) at least partially housed within the nacelle (1) for cooling a wind turbine component (5) by means of a cooling fluid. In this invention, the cooling circuit (3) comprises at least one exterior cooling fin (10) extending from the outer surface (2) and at least one pump (4) for pumping the cooling fluid through the cooling circuit (3), wherein the cooling fin (10) comprises at least one inlet port (11), at least one outlet port (12), and a pipe (13) coupled on one end to the inlet port (11) and on the other end to the outlet port (12) in such a way that the cooling fluid flows from the inlet port (11) through the pipe (13) to the outlet port (12) .

## Description

The present invention relates to a nacelle for a wind turbine.

Wind turbines are increasingly used for the generation of electrical energy. A wind turbine comprises a tower and a nacelle mounted on the tower, to which a hub is attached. A rotor is mounted at the hub and coupled to a generator. A plurality of blades extends from the rotor. The blades are oriented in such a way that wind passing over the blades turns the rotor, thereby driving the generator. Hence, the rotational energy of the blades is transferred to the generator, which then converts the mechanical energy into electricity and transfers the electricity to the electrical grid.

Traditional wind turbines comprise a cooling circuit comprising at least one heat transfer device to dissipate the heat produced during operation of the wind turbine into the environment. The heat transfer device is usually a cooler arranged at the outer part of the nacelle.

Conventional passive coolers are known, such as in EP 3 680 481 A1. These coolers are usually installed on top of the nacelle and the heat is transferred from the heated wind turbine components to the passive cooler. Air from the atmosphere passes through the cooler and the heat can be dissipated in this way to the atmosphere. This type of cooler has the drawback that the length of the cooler is limited to the width of the nacelle outer structure. In addition, these coolers have a limited height due to installation restrictions and maintenance or for safety in case the nacelle comprises a heliport platform.

Active coolers and fans are also known, which can be installed at the back of the nacelle. Cold air is suctioned in from the outside by fans to cool the wind turbine components such as the generator. The heated air is then blown back outside. A drawback of using active coolers is that they are noisy due to the fans used and the amount of noise is restricted in many countries. In addition, the power consumption of active coolers is high compared to passive coolers, as fans have high power consumption requirements due to the fact that fans are the devices driving the cooling flow through the cooler.

Air cooling using active and passive coolers has the drawback that in humid environments with a high salt content in the air, such as in coastal regions or for offshore wind turbines, the heat exchangers corrode fast or might get clogged and blocked.

The cooling requirements of older wind turbines were not as high as for actual wind turbines, as older wind turbines were much smaller in size than the currently produced wind turbine models. Hence, for smaller wind turbines, passive cooling system such as the one disclosed in US 2011 140 444 A1 are sufficient for dissipating the heat produced by the wind turbine. In the cooling system disclosed here, fins are used as the heat exchanger to dissipate the heat of operation to the atmosphere. This application discloses a plurality of external cooling fins, which may be cast as an integral portion of the nacelle or fastened to the nacelle, extending from the nacelle outer surface and comprising a hollow body and a fin housing which serves as the heat exchanger surface, wherein the hollow body of the fin is directly coupled to a reservoir filled with a cooling liquid such as oil to cool the nacelle. The rotation of the main shaft of such a small wind turbine is enough for the liquid to move and pass through the fin. However, other cooling fluids such as air are not suited to be used in such a cooling system. The cooling surface of the cooling liquid in contact with the inner fin surface is also very limited, as it is limited by the inner surface of the hollow fin, which greatly limits the heat exchange of the cooling liquid to the fin and from the fin to the atmosphere. In addition, it is difficult to control the flow in the cooling circuit presented in this document. Thus, such a solution might have been well-suited for older wind turbine models, but for the current size of wind turbines the cooling requirements are higher and more efficient cooling systems with an improved and faster energy dissipation are required for a normal operation of the wind turbine.

Hence, the current development of the technology of wind turbines tends to an increased size of wind turbines for harvesting more wind energy, with longer blades and higher towers. As more energy is produced, the size and weight of the drive train components, i.e. the gearbox, the generator or the power electronics, and the components connected to the drive train components have increased in size as well. This increased size of wind turbine components results in a higher amount of heat produced, which has to be dissipated to the atmosphere for a correct operation of the wind turbine. Conventional coolers have a limited heat dissipation due to its size limit and the limited space on the nacelle, thus conventional coolers are not suited for bigger wind turbines.

Hence, there is a need for the cooling circuit to adapt to the fast growth of the wind turbine and to increase the power dissipation and the efficiency of the cooling circuit of wind turbines.

It is thus an object for the invention to provide a nacelle comprising a cooling circuit with an increased and optimized power dissipation.

This is achieved by a nacelle for a wind turbine according to claim 1.

According to the invention, a nacelle for a wind turbine comprises an outer surface and a cooling circuit.

The cooling circuit is at least partly housed within the nacelle, but can also be completely housed within the nacelle, with the exception of heat exchangers which are arranged on outside the nacelle housing to dissipate the heat of the cooling circuit to the atmosphere. Thus, the cooling circuit serves to cool wind turbine components by means of a cooling fluid.

The cooling circuit comprises at least one exterior cooling fin extending from the outer surface of the nacelle, which serves as a heat exchanger to dissipate the heat of the cooling circuit to the atmosphere. Hence, the fin is not housed within the nacelle, but is erected, at least partly, at the outer surface of the nacelle.

The cooling circuit further comprises at least one pump for pumping the cooling fluid through the cooling circuit. The pump gives enough pressure to the circuit to keep the cooling fluid flowing from the wind turbine component to be cooled to the fin. The pump can be arranged anywhere within the cooling circuit and it can be housed within the nacelle, but also within the tower or on a platform outside the outer structure of the wind turbine.

The use of a pump allows to control the flow through the cooling circuit. This is particularly useful when a high heat transfer rate is needed, such as for newer and bigger wind turbines, compared to wind turbine cooling systems without a pump, which are usually designed for smaller wind turbines with a low heat transfer rate. For smaller wind turbines, the rotation of the shaft suffices for making the cooling fluid flow within the cooling circuit.

The cooling fin comprises at least one inlet port, at least one outlet port, and a pipe coupled on one end to the inlet port and on the other end to the outlet port in such a way that the cooling fluid flows from the inlet port through the pipe to the outlet port.

The pipe has usually a circular cross-section, which offers much more heat exchange surface and allows a faster dissipation of heat to the atmosphere compared to the known hollow fins cast as an integral portion of the nacelle or fastened to the nacelle and extending from the nacelle outer surface. These fins known from the prior art comprise a hollow body and a fin housing which serves as the heat exchanger surface, wherein the hollow body of the fin is directly coupled to a reservoir filled with a cooling liquid such as oil to cool the nacelle. The fin according to the invention offers more heat exchange surface by using a pipe instead of a hollow fin body, thereby increasing the heat transfer from the cooling fluid to the atmosphere, as the cooling fluid has a higher heat transfer surface compared to hollow fins. Hence, the cooling fluid of the fin according to the invention is more exposed to the fin material surface, i.e. the pipe, than the fins known from the prior art.

The cooling fluid is preferably any suitable coolant. A liquid, such as antifreeze can be used, if desired over or through wind turbine devices. A lubricating type of heat transfer oil fluid may be used to pass through the electric generator for cooling and lubrication of the generator rotor bearings. The lubricating type of oil fluid may also be used to cool and lubricate other rotating bearing systems within the wind turbine.

Preferably, the cooling fluid comprises water, water-glycol and/or oil.

The cooling circuit can also comprise further conventional heat exchangers such as the ones known in the prior art, as the invention presented here is compatible with other heat exchangers, such as fans and active or passive coolers.

An advantage of using exterior cooling fins for the heat exchange of the cooling circuit is that the system is easily scalable to any size of wind turbine, as the number of fins or the length of the tubes can be increased to increase the heat transfer. In addition, the cooling fins can easily be integrated in current wind turbines because there is enough empty space on the outer surface of the nacelle for the installation of fins. In addition, the power consumption of such a system is low compared to other coolers known from the prior art, as only the power for driving the pump is needed for the cooling fluid to flow through the circuit. In comparison, systems comprising fans require further electricity input to power the fans. A further advantage of the use of cooling fins is that it is a passive system and does not require fans, so no noise is emitted.

According to a preferred embodiment of the invention, the cooling circuit comprises a plurality of exterior cooling fins extending from the outer surface, wherein each cooling fin comprises at least one inlet port, at least one outlet port, and a pipe coupled on one end to the inlet port and on the other end to the outlet port in such a way that the cooling fluid flows from the inlet port through the pipe to the outlet port.

This has the advantage that the surface area for the heat transfer to the outside environment is increased.

According to another preferred embodiment of the invention, the plurality of exterior cooling fins is arranged in at least one rack of fins. In particular, the rack of fins comprises at least two fins, in particular at least ten fins placed on a lateral side of the outer surface of the nacelle.

In a particularly preferred embodiment, the plurality of exterior cooling fins can be arranged in a rack of fins placed on one or more sides of the nacelle outer surface. These fins are then coupled to the cooling circuit and cooling fluid is pumped through the fins to refrigerate the wind turbine components.

Preferably, at least one rack of fins is arranged on one lateral side of the nacelle outer surface. The lateral side of the nacelle is well suited for heat exchange, as the wind passes through the blades and around the nacelle outer surface, so the amount of wind is increased at the lateral sides of the nacelle compared to, for example, the back side of the nacelle.

Preferably, at least one rack of fins comprises at least ten exterior cooling fins. More preferably, each rack of fins comprises at least ten exterior cooling fins.

Preferably, at least one rack of fins comprises up to fifty exterior cooling fins. More preferably, each rack of fins comprises up to fifty exterior cooling fins.

According to another preferred embodiment of the invention, the exterior cooling fins arranged in one rack of fins are separated by at least 1cm, preferably 5cm from each other in such a way that air can flow between the pipes. Preferably, the exterior cooling fins arranged in one rack of fins are separated up to 10cm from each other. In particular, the pipes of the cooling fins forming the rack of fins are separated by at least 1cm, preferably 5cm from each other and/or up to 10cm from each other in such a way that air can flow between the pipes.

According to another preferred embodiment of the invention, the pipes of the cooling fins forming the rack of fins are in tangential contact with at least another pipe of the cooling fins forming the rack of fins. By tangentially contacting other pipes, the stability of the rack is improved, and a vibration of single pipes can be avoided or minimized. In this configuration, the heat distribution is more uniform than with separated pipes because all the pipes are in contact with the neighboring pipes.

According to another preferred embodiment of the invention, the pipes of the cooling fins forming the rack of fins are connected to at least another pipe of the cooling fins forming the rack of fins by means of a pipe support. A pipe support can be a beam, a plate or a case at least partially encasing the pipes to support the pipes. By this measure the stability of the rack is improved, and a vibration of single pipes can be avoided or minimized. In addition, due to the contact of the pipes by means of the pipe support, the heat distribution is more uniform than with separated pipes.

According to another preferred embodiment of the invention, the pipes of the cooling fins forming the rack of fins are drills in a solid block of material. This is advantageous from a manufacturing point of view but has a lower heat transfer performance compared to other embodiments.

According to another preferred embodiment of the invention, each inlet port of each exterior cooling fin arranged in one rack of fins is coupled to the cooling circuit by a common inlet manifold for distributing the cooling fluid to each of the cooling fins arranged in the rack of fins. The cooling fluid can be driven by the use of a pump to the inlet manifold of the rack of fins. The function of the inlet manifold is to ensure the equitable distribution of the cooling fluid among all inlet ports of all pipes attached to the inlet manifold.

According to another preferred embodiment of the invention, each outlet port of each exterior cooling fin arranged in one rack of fins is coupled to the cooling circuit by a common outlet manifold for collecting the cooling fluid of each of the cooling fins arranged in the rack of fins. After the cooling fluid has circulated through each cooling fin of the rack of fins, it is then collected at the outlet manifold to be driven back in a cooled state to the wind turbine component to be cooled.

According to another preferred embodiment of the invention, the cooling circuit comprises a plurality of pumps for pumping the cooling fluid through the cooling circuit. The pumps can be arranged at different places of the cooling circuit to keep a high pressure throughout the cooling circuit and to be able to better control the flow and any pressure drops throughout the circuit.

According to another preferred embodiment of the invention, the cooling circuit comprises different cooling loops for different wind turbine components, each cooling loop comprising a pump, wherein the cooling loops are coupled to other cooling loops by means of heat exchangers or comprise cooling fins to transfer the heat to the atmosphere directly.

Having separate cooling loops allows to use different cooling fluids for each loop, as the cooling fluid of each cooling loop do not mix with the other ones. This allows to tailor the cooling circuit to the heat dissipation requirements of each wind turbine component for a more efficient cooling.

Alternatively, a plurality of cooling loops, which may be coupled to different racks of fins, can be used to cool a single wind turbine component, for example if the component requires more cooling than other wind turbine components. For example, the generator, which produces a high amount of heat, can be cooled using a plurality of cooling loops.

According to another preferred embodiment of the invention, the pipe of at least one cooling fin is exposed to the atmosphere for directly transferring the heat of the cooling fluid to the atmosphere. Preferably, each pipe of each cooling fin is exposed to the atmosphere for directly transferring the heat of the cooling fluid to the atmosphere. This allows for a highly efficient heat transfer from the cooling fluid over the pipe material directly to the atmosphere.

According to another preferred embodiment of the invention, the pipe of at least one cooling fin is encased in a pipe casing. Preferably, each pipe of each cooling fin is encased in a pipe casing. Encasing the pipe in a pipe casing increases the stability of the cooling fin and protects the cooling fin against humidity and salt in the air by preventing the corrosion of the pipe of the cooling fin.

According to another preferred embodiment of the invention, the pipe of at least one cooling fin is supported by a pipe support, such as a beam. The pipe support provides a support structure for the pipes to which it is attached to, which counteracts vibration effects caused by wind and supports the weight of the cooling fin.

According to another preferred embodiment of the invention, the cooling circuit comprises one sensor or a plurality of sensors to monitor the heat level in the cooling circuit. This has the advantage that the cooling fluid flow can be regulated depending on the monitored values of temperature of the fluid throughout the cooling circuit. If not enough heat is dissipated, the flow can be increased by means of the pump to improve the heat transfer.

According to another preferred embodiment of the invention, the pipe of at least one cooling fin comprises a plurality of pipe bends for increasing the surface area for the heat transfer. Hence, the fin is not a block of hollow solid metal, the fin is made by a meandering pipe through which the cooling fluid flows.

According to another preferred embodiment of the invention, the cooling circuit can be a closed loop cooling circuit. Alternatively, the cooling circuit can be an open loop cooling circuit, wherein outside air can be used for cooling the wind turbine components by using outside air as the cooling fluid. If necessary, air filters may also be mounted in the cooling path.

According to another preferred embodiment of the invention, the pipe bends of a plurality of pipe bends of the pipe of the cooling fin are separated from each other in such a way that air can flow between the separation between the pipe bends.

According to another preferred embodiment of the invention, a plurality of pipe bends of the pipe of the cooling fin is connected to other pipe bends of said pipe of the cooling fin by means of a pipe support. A pipe support can be a beam, a plate or a case at least partially encasing the pipe bends to support the pipe. By this measure the stability of the pipe is improved, and a vibration of the single pipe bends can be avoided or minimized. In addition, due to the contact of the pipe bends by means of the pipe support, the heat distribution is more uniform than with separated pipe bends.

According to another preferred embodiment of the invention, a plurality of pipe bends of the pipe of the cooling fin is in tangential contact with other pipe bends of said pipe of the cooling fin. By tangentially contacting other pipe bends, the stability of the pipe is improved, and a vibration of the single pipe bends can be avoided or minimized. In this configuration, the heat distribution is more uniform than with separated pipe bends because the pipe bends are in contact with the neighboring pipe bends.

According to another preferred embodiment of the invention, the pipes of the cooling fins forming the rack of fins are drills in a solid block of material. This is advantageous from a manufacturing point of view but has a lower heat transfer performance compared to other embodiments.

In order to facilitate the understanding of the characteristics of the invention and being an integral part of this specification, some drawing sheets are attached on which figures, with an illustrative but not limiting character, the following is represented:
Figure 1 shows the nacelle of a wind turbine comprising two racks of fins.
Figure 2 shows a pipe of a cooling fin according to one embodiment of the invention.
Figure 3 shows a pipe of a cooling fin according to another embodiment of the invention.
Figure 4 shows a cooling circuit comprising a cooling loop according to one embodiment of the invention.
Figure 5 shows a cooling circuit comprising two cooling loops according to another embodiment of the invention.
Figure 6 shows a cooling circuit comprising a cooling loop according to another embodiment of the invention.
Figure 7 shows a cooling circuit comprising two cooling loops according to another embodiment of the invention.
Figures 8 to 11 show different configurations of pipe bends 14 of the pipe 13 of a cooling fin 10.

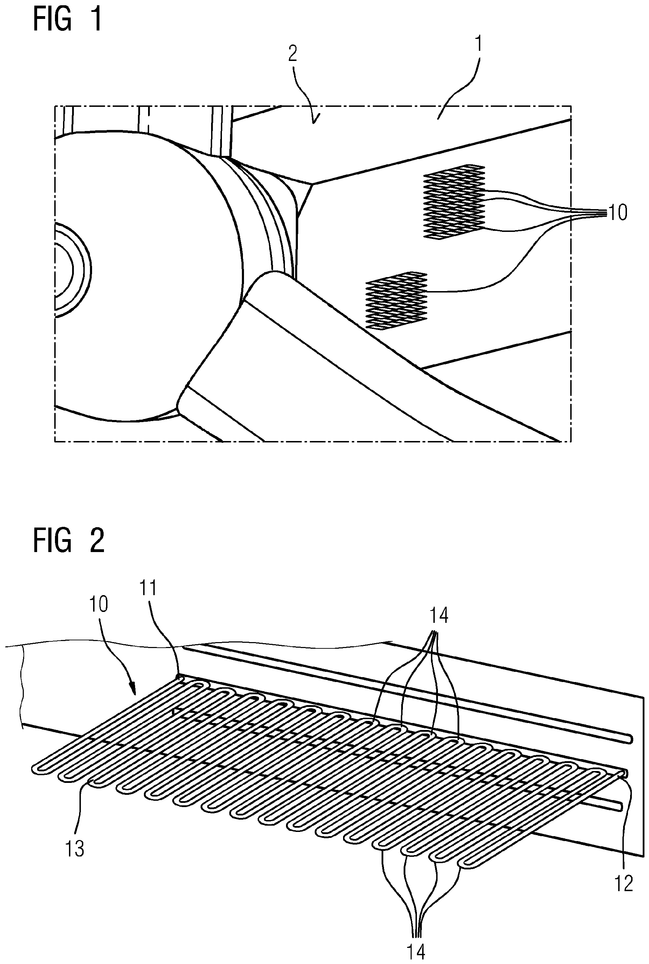

Figure 1 shows the nacelle 1 of a wind turbine comprising two racks of fins, each rack comprising at least two cooling fins 10, in particular at least ten cooling fins 10 extending from the outer surface 2 of the nacelle 1, which serves as a heat exchanger to dissipate the heat of the cooling circuit 3 to the atmosphere. Each of the cooling fins 10 comprises at least one pipe 13 through which cooling fluid flows.

The plurality of exterior cooling fins 10 is arranged in a rack of fins placed on one sides of the nacelle outer surface 2. These fins 10 are then coupled to the cooling circuit 3 and cooling fluid is pumped through the fins 10 to refrigerate the wind turbine components 5.

Both rack of fins shown in the figure are arranged on one lateral side of the nacelle outer surface 2. The lateral side of the nacelle 1 is well suited for heat exchange, as the wind passes through the blades and around the nacelle outer surface 2, so the amount of wind is increased at the lateral sides of the nacelle 1 compared to, for example, the back side of the nacelle 1.

Figure 2 shows a pipe 13 of a cooling fin 10 comprises a plurality of pipe bends 14 for increasing the surface area for the heat transfer. Hence, the fin 10 is not a block of hollow solid metal, the fin 10 is made by a meandering pipe 13 through which the cooling fluid flows.

The cooling fin 10 further comprises one inlet port 11 and one outlet port 12, wherein the pipe 13 is coupled on one end to the inlet port 11 and on the other end to the outlet port 12 in such a way that the cooling fluid flows from the inlet port 11 through the pipe 13 to the outlet port 12.

The pipe 13 of the fin 10 is exposed to the atmosphere for directly transferring the heat of the cooling fluid to the atmosphere. This allows for a highly efficient heat transfer from the cooling fluid over the pipe material directly to the atmosphere.

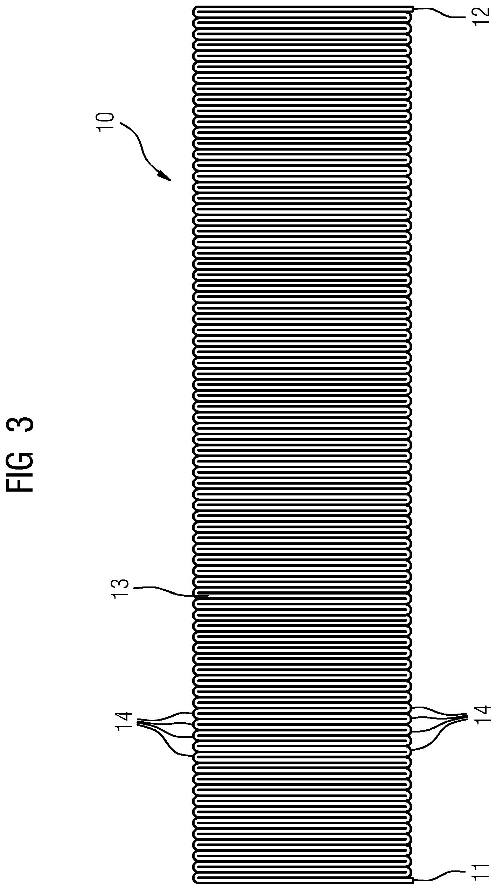

Figure 3 shows a pipe 13 of a cooling fin 10 comprises a plurality of pipe bends 14 for increasing the surface area for the heat transfer. Compared to Figure 2, the pipe 13 shown in Figure 3 comprises more pipe bends 14, thus the surface area for the heat exchange between the cooling fluid and the atmosphere is increased in this embodiment, which results in a more efficient cooling.

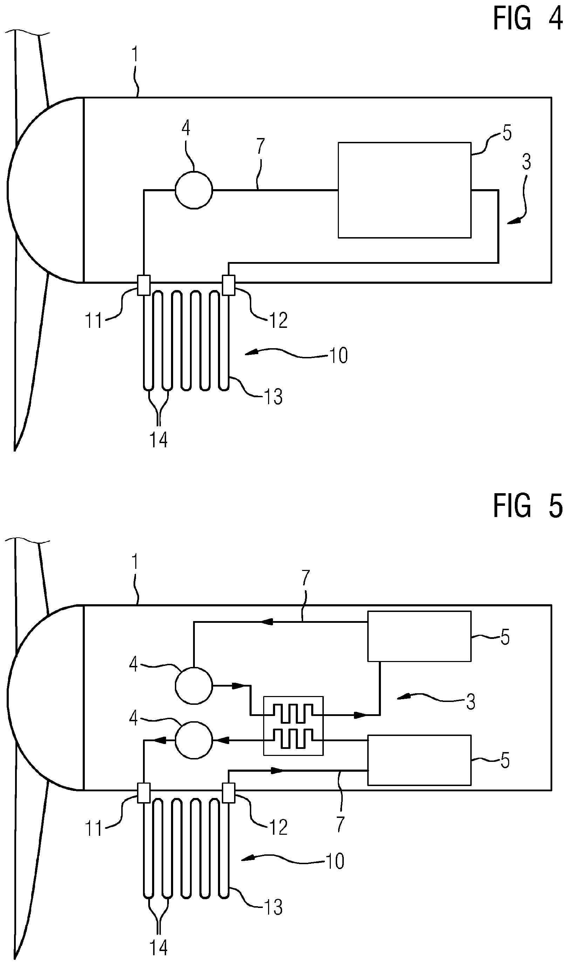

Figure 4 shows a cooling circuit 3 of a wind turbine comprising a cooling loop 7 according to one embodiment of the invention. This figure shows the cooling circuit 3 from a top view, as seen from above the nacelle 1. The incoming wind blows from the left side of the figure to the right side of the figure, passes the blades and flows through the lateral side of the nacelle outer structure 2, on which a cooling fin 10 is arranged.

The cooling fin 10 comprises one inlet port 11, one outlet port 12 and a pipe 13, wherein the pipe 13 is coupled on one end to the inlet port 11 and on the other end to the outlet port 12 in such a way that the cooling fluid flows from the inlet port 11 through the pipe 13 to the outlet port 12.

The outlet port 12 is directly coupled to a wind turbine component 5 to provide a fluid connection for the cooling fluid to cool down the wind turbine component 5. After the wind turbine component 5, a pump 4 is arranged to increase the pressure of the cooling fluid inside the cooling loop 7 for a more efficient cooling, the pressure is fluidly coupled to the inlet port 11 of the cooling fin 10.

Hence, in this embodiment, the hot coolant exiting from the wind turbine component 5 is driven by the pump 4 to the inlet manifold 11 of at least one cooling fin 10. It is also possible to have a plurality of cooling fins 10 arranged in a rack of fins, then the hot coolant exiting from the wind turbine component 5 is driven by the pump 4 to the inlet manifold 11 of the rack of fins. In a rack of fins, the function of the

Figure 5 shows a cooling circuit 3 of a wind turbine comprising two cooling loops 7 according to another embodiment of the invention. This figure shows the cooling circuit 3 from a top view, as seen from above the nacelle 1. Hence, the cooling circuit 3 comprises two different cooling loops 7 for two different wind turbine components 5, each cooling loop 7 comprising a pump 4, wherein the cooling loops 7 are coupled to each other by means of a heat exchanger. To dissipate the heat of both cooling loops 7 to the atmosphere, on of the cooling loops 7 comprises a cooling fin 10.

Having separate cooling loops 7 allows to use different cooling fluids for each loop 7, as the cooling fluid of each cooling loop 7 do not mix with the other ones. This allows to tailor the cooling circuit 3 to the heat dissipation requirements of each wind turbine component 5 for a more efficient cooling. For example in this embodiment, one wind turbine component 5 can be cooled with oil as cooling fluid and the other wind turbine component 5 can be cooled by water as cooling fluid.

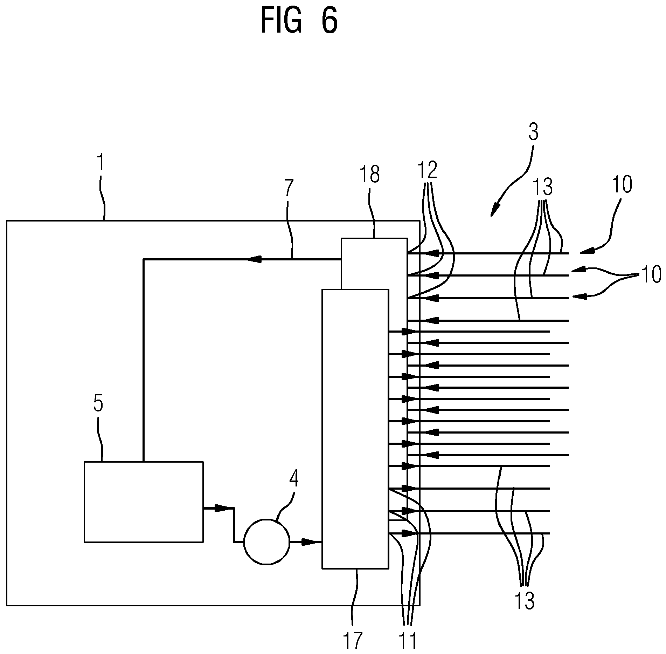

Figure 6 shows a cooling circuit 3 of a wind turbine comprising a cooling loop 7 according to another embodiment of the invention. This figure shows the cooling circuit 3 from a front view of the nacelle 1 in the longitudinal direction of the axis of the nacelle 1.

In this Figure, each inlet port 11 of each exterior cooling fin 10 arranged in one rack of fins is coupled to the cooling circuit 3 by a common inlet manifold 17 for distributing the cooling fluid to each of the cooling fins 10 arranged in the rack of fins. The cooling fluid is driven by the use of a pump 4 to the inlet manifold 17 of the rack of fins. The function of the inlet manifold 17 is to ensure the equitable distribution of the cooling fluid among all inlet ports 11 of all pipes 13 attached to the inlet manifold 17.

In this Figure, each outlet port 12 of each exterior cooling fin 10 arranged in one rack of fins is coupled to the cooling circuit 3 by a common outlet manifold 18 for collecting the cooling fluid of each of the cooling fins 10 arranged in the rack of fins. After the cooling fluid has circulated through each cooling fin 10 of the rack of fins, it is then collected at the outlet manifold 18 to be driven back in a cooled state to the wind turbine component 5 to be cooled.

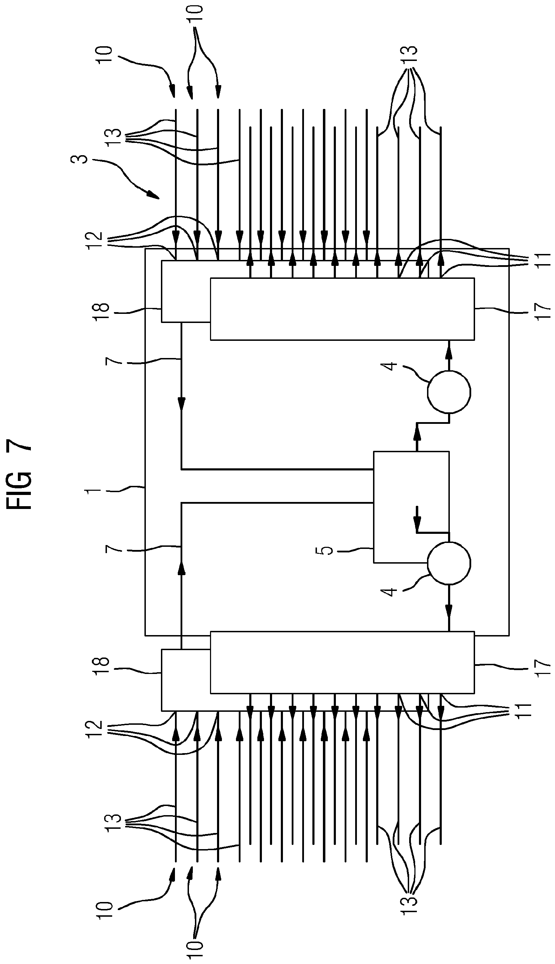

Figure 7 shows a cooling circuit 3 of a wind turbine comprising two cooling loops 7 according to another embodiment of the invention. Each cooling loop 7 is coupled to an inlet manifold 17 and to an outlet manifold 6, as already seen in Figure 6. This figure shows the cooling circuit 3 from a front view of the nacelle 1 in the longitudinal direction of the axis of the nacelle 1.

In this embodiment, the two cooling loops 7 share the same wind turbine component 5 to cool and each cooling loop 7 is coupled to a different rack of fins. Hence, both cooling loops 7 are used to cool a single wind turbine component 5, for example if the component 5 requires more cooling than other wind turbine components 5. For example, the generator, which produces a high amount of heat, can be cooled using a plurality of cooling loops 7.

Each rack of fins is arranged at opposite lateral sides of the nacelle 1 for a more efficient cooling, as the air passing around the nacelle 1 reaches both racks of fins separately.

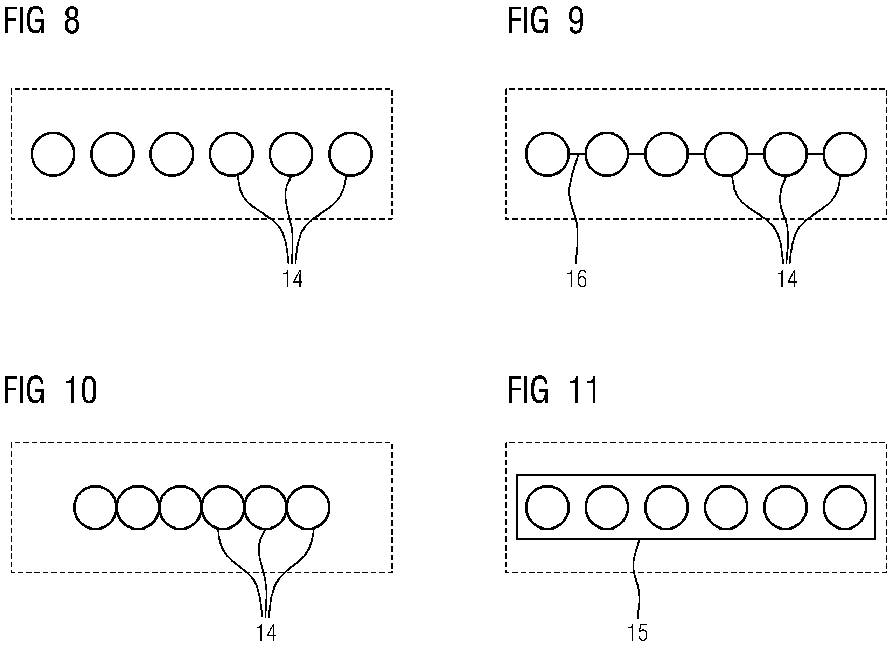

Figures 8 to 11 show different configurations of pipe bends 14 of the pipe 13 of a cooling fin 10.

In Figure 8, the pipe bends 14 of a plurality of pipe bends 14 of the pipe 13 of the cooling fin 10 are separated from each other in such a way that air can flow between the separation between the pipe bends 14.

In Figure 9, a plurality of pipe bends of the pipe 13 of the cooling fin 10 is connected to other pipe bends 14 of said pipe 13 of the cooling fin 10 by means of a pipe support 16.

In Figure 10, a plurality of pipe bends 14 of the pipe 13 of the cooling fin 10 is in tangential contact with other pipe bends 14 of said pipe 13 of the cooling fin 10.

In Figure 11, the pipes 13 of the cooling fins 10 forming the rack of fins are drills in a solid block of material.

### Reference numbers

- 1: Nacelle
- 2: Outer surface
- 3: Cooling circuit
- 4: Pump
- 5: Wind turbine component
- 6: Heat exchanger
- 7: Cooling loop
- 10: Cooling fin
- 11: Inlet port
- 12: Outlet port
- 13: Pipe
- 14: Pipe bend
- 15: Pipe casing
- 16: Pipe support
- 17: Inlet manifold
- 18: Outlet manifold

## Claims

1. A nacelle (1) for a wind turbine comprising an outer surface (2) and
a cooling circuit (3) at least partially housed within the nacelle (1) for cooling a wind turbine component (5) by means of a cooling fluid,
wherein the cooling circuit (3) comprises at least one exterior cooling fin (10) extending from the outer surface (2) and at least one pump (4) for pumping the cooling fluid through the cooling circuit (3),
wherein the cooling fin (10) comprises at least one inlet port (11), at least one outlet port (12), and a pipe (13) coupled on one end to the inlet port (11) and on the other end to the outlet port (12) in such a way that the cooling fluid flows from the inlet port (11) through the pipe (13) to the outlet port (12).

2. The nacelle (1) according to claim 1, wherein the cooling circuit (3) comprises a plurality of exterior cooling fins (10) extending from the outer surface (2), wherein each cooling fin (10) comprises at least one inlet port (11), at least one outlet port (12), and a pipe (13) coupled on one end to the inlet port (11) and on the other end to the outlet port (12) in such a way that the cooling fluid flows from the inlet port (11) through the pipe (13) to the outlet port (12).

3. The nacelle (1) according to claim 2, wherein the plurality of exterior cooling fins (10) is arranged in at least one rack of fins.

4. The nacelle (1) according to claim 3, wherein the pipes (13) of the cooling fins (10) forming the rack of fins are separated by at least 1cm, preferably 5cm from each other and/or up to 10cm from each other in such a way that air can flow between the pipes (13).

5. The nacelle (1) according to claim 3, wherein the pipes (13) of the cooling fins (10) forming the rack of fins are in tangential contact with at least another pipe (13) of the cooling fins (10) forming the rack of fins.

6. The nacelle (1) according to any of the claims 3 to 5, wherein the pipes (13) of the cooling fins (10) forming the rack of fins are connected to at least another pipe (13) of the cooling fins (10) forming the rack of fins by means of a pipe support (16).

7. The nacelle (1) according to any of the claims 3 to 6, wherein the rack of fins comprises at least two exterior cooling fins (10), in particular at least ten exterior cooling fins (10) placed on a lateral side of the outer surface (2) of the nacelle (1).

8. The nacelle (1) according to any of the claims 3 to 7, wherein each inlet port (11) of each exterior cooling fin (10) arranged in one rack of fins is coupled to the cooling circuit (3) by a common inlet manifold (17) for distributing the cooling fluid to each of the cooling fins (10) arranged in the rack of fins.

9. The nacelle (1) according to any of the claims 3 to 8, wherein each outlet port (12) of each exterior cooling fin (10) arranged in one rack of fins is coupled to the cooling circuit (3) by a common outlet manifold (18) for collecting the cooling fluid of each of the cooling fins (10) arranged in the rack of fins.

10. The nacelle (1) according to any of the preceding claims, wherein the cooling circuit (3) comprises a plurality of pumps (4) for pumping the cooling fluid through the cooling circuit (3).

11. The nacelle (1) according to any of the preceding claims, wherein the cooling circuit (3) comprises different cooling loops (7) for different wind turbine components (5), each cooling loop (7) comprising a pump (4), wherein the cooling loops (7) are coupled to other cooling loops by means of heat exchangers or comprise exterior cooling fins (10) for transferring the heat to the atmosphere.

12. The nacelle (1) according to any of the preceding claims, wherein the pipe (13) of at least one cooling fin (10) is exposed to the atmosphere for directly transferring the heat of the cooling fluid to the atmosphere.

13. The nacelle (1) according to any of the claims 1 to 11, wherein the pipe (13) of at least one cooling fin (10) is encased in a pipe casing (15).

14. The nacelle (1) according to any of the preceding claims, wherein the cooling circuit (3) comprises one sensor or a plurality of sensors to monitor the heat level in the cooling circuit (3).

15. The nacelle (1) according to any of the preceding claims, wherein the pipe (13) of at least one cooling fin (10) comprises a plurality of pipe bends (14) for increasing the surface area for the heat transfer.
